# FASCICULE DE BREVET EUROPEEN

(11) **EP 4 308 824 B1**
(45) Date de publication et mention de la délivrance du brevet: **29.01.2025**
(21) Numéro de dépôt: 22712931.9
(22) Date de dépôt: 14.03.2022
(51) Int. Cl.: F16D 11/14, F16D 27/118, F16H 48/24

(54) **SYSTÈME DE TRANSMISSION ÉQUIPÉ D'UN DISPOSITIF D'ACCOUPLEMENT**
ÜBERTRAGUNGSSYSTEM MIT EINER KUPPLUNGSVORRICHTUNG
TRANSMISSION SYSTEM EQUIPPED WITH A COUPLING DEVICE

(30) Priorité: 15.03.2021 FR 2102553
(43) Date de publication de la demande: 24.01.2024
(73) Titulaire: VALEO EMBRAYAGES, 80009 Amiens (FR)
(72) Inventeur: VERHOOG, Roel, 80009 AMIENS (FR); HENNEBELLE, Michael, 80009 Amiens (FR)
(74) Mandataire: Valeo Powertrain Systems
(86) Numéro de dépôt international: PCT/EP2022/056438
(87) Numéro de publication internationale: WO 2022/194729

(56) Documents cités:
- JP-A- 2008 057 692
- JP-A- 2010 084 930
- US-A1- 2015 114 786

## Description

### Domaine technique

L'invention concerne le domaine des chaînes de transmission de véhicule.

Elle concerne plus particulièrement un système de transmission comportant un premier élément destiné à être entrainé par un moteur, un deuxième élément destiné à entraîner au moins un arbre de roue d'un véhicule et un dispositif d'accouplement apte à sélectivement accoupler le premier élément au deuxième élément.

L'invention vise notamment un système de transmission de type différentiel visant à transmettre et distribuer un couple provenant d'un moteur vers deux arbres de roue d'un essieu du véhicule.

### Arrière-plan technologique

Le document US2015114786 divulgue un système de transmission de type différentiel. Le système de transmission comporte un boitier de différentiel mobile en rotation autour d'un axe A qui est équipé d'une roue dentée entrainée par un moteur du véhicule. A l'intérieur du boîtier sont logés une couronne porteuse guidée en rotation dans le boîtier, deux engrenages satellites qui sont montés en rotation sur la couronne porteuse autour d'un axe B perpendiculaire à l'axe A, et deux engrenages planétaires qui engrènent chacun avec les deux engrenages satellites et qui sont chacun solidaires en rotation d'un arbre de roue. Par ailleurs, le système de transmission comporte un dispositif d'accouplement qui permet soit d'accoupler le boîtier du système de transmission à la couronne porteuse afin de permettre une transmission et une distribution du couple du moteur vers les deux arbres de roue de l'essieu soit de les désaccoupler afin d'interrompre la transmission de couple entre le moteur et les arbres de roue.

Le dispositif d'accouplement est un dispositif à crabot. Il comporte une première partie d'accouplement présentant une portion annulaire disposée à l'extérieur du boitier et des éléments en saillie qui s'étendent depuis la portion annulaire et passent au travers d'orifices ménagés dans le boîtier, ce qui permet de solidariser en rotation la première partie d'accouplement et le boîtier. Les éléments en saillie comportent des dentures destinées à coopérer avec des rainures complémentaires ménagées sur la couronne porteuse. La première partie d'accouplement est mobile axialement par rapport au boitier entre une position désaccouplée et une position accouplée dans laquelle les dentures de la première partie d'accouplement engrènent avec les rainures de la couronne porteuse.

Un actionneur électromagnétique est apte à exercer un effort axial sur la première partie d'accouplement de manière à la déplacer de la position désaccouplée vers la position accouplée. Par ailleurs, le système de transmission comporte une cible annulaire qui est fixée axialement à la portion annulaire de la première portion d'accouplement. La cible annulaire est disposée axialement en regard d'un capteur, tel qu'un capteur à effet hall, qui délivre un signal représentatif d'une distance axiale entre le capteur et la cible annulaire.

Le système de transmission comporte en outre une rondelle élastique qui est disposée axialement entre la cible annulaire et le boîtier. Cette rondelle élastique a notamment pour fonction d'exercer un effort de rappel sur la première partie d'accouplement de manière à la rappeler vers sa position désaccouplée lorsque l'actionneur électro-magnétique n'exerce plus d'effort sur la première partie d'accouplement.

Un tel système de transmission n'est pas pleinement satisfaisant.

En particulier, le dispositif d'accouplement du système de transmission présente de nombreuses pièces différentes, notamment pour assurer les fonctions de cible et de rappel du dispositif d'accouplement dans sa position désaccouplée, ce qui augmente sa complexité, son coût et/ou son encombrement.

### Résumé

Une idée à la base de l'invention est de proposer un système de transmission équipé d'un dispositif d'accouplement, d'une cible et d'un capteur apte à délivrer un signal représentatif de l'état du dispositif d'accouplement ; ce système de transmission étant plus simple et/ou moins encombrant.

Selon un mode de réalisation, l'invention fournit un système de transmission pour un véhicule automobile comprenant :
- un premier élément et un deuxième élément mobiles en rotation l'un par rapport à l'autre autour d'un axe X, l'un des premier et deuxième éléments étant destiné à être entrainé par un moteur et l'autre des premier et deuxième éléments étant destiné à entraîner au moins un arbre de roue du véhicule automobile ; et
- un dispositif d'accouplement qui comporte :
   - une première partie d'accouplement qui est solidaire en rotation du premier élément et une deuxième partie d'accouplement qui est solidaire en rotation du deuxième élément, la première partie d'accouplement étant mobile par rapport au premier élément entre une position accouplée dans laquelle la première partie d'accouplement est accouplée avec la deuxième partie d'accouplement pour transmettre un couple entre le premier élément et le deuxième élément et une position désaccouplée dans laquelle la première partie d'accouplement et la deuxième partie d'accouplement sont désaccouplées l'une de l'autre,
   - un disque qui comporte une zone de fixation qui est fixée axialement à la première partie d'accouplement, le disque comportant une portion annulaire formant cible et au moins une portion élastique de rappel qui est configurée pour se déformer élastiquement lors du mouvement de la première partie d'accouplement de la position désaccouplée vers la position accouplée et exercer un effort de rappel apte à rappeler élastiquement la première partie d'accouplement vers la position désaccouplée.

Ainsi, le disque présente une double fonctionnalité, à savoir, d'une part, former la cible dont la position est apte à être détectée par un capteur de manière à délivrer un signal indiquant la position de la première partie du dispositif d'accouplement et, d'autre part, assurer le rappel de la première partie d'accouplement vers sa position désaccouplée. Ceci permet de diminuer le coût, la complexité et l'encombrement d"un tel système de transmission.

Selon des modes de réalisation, un tel système de transmission peut comporter une ou plusieurs des caractéristiques suivantes.

Selon un mode de réalisation, le système de transmission comprend un capteur qui est disposé en regard de la portion annulaire du disque et qui est configuré pour délivrer un signal représentatif d'une distance entre le capteur et la portion annulaire formant cible.

Selon un mode de réalisation, le capteur est disposé axialement en regard de la portion annulaire du disque.

Selon un mode de réalisation, lors du mouvement de la première partie d'accouplement de la position désaccouplée vers la position accouplée, la portion élastique de rappel est contrainte élastiquement entre une zone d'appui du système de transmission et la zone de fixation . De préférence, ladite zone d'appui est fixe axialement par rapport à la deuxième partie d'accouplement.

Selon un mode de réalisation, le disque est réalisé en acier à ressort, tel que l'acier XC 70, avantageusement pré-durci. Selon un mode de réalisation, le disque présente une épaisseur comprise entre 0.4 et 1,2 mm, par exemple de l'ordre de 0,8 mm. Selon un mode de réalisation, le disque est réalisé en acier inoxydable qui est un métal non-magnétique, ce qui limite également les fuites indésirables de flux magnétiques.

Selon un mode de réalisation, le disque comporte une pluralité de portions élastiques de rappel comportant chacune une lame élastique apte à venir en appui contre une zone d'appui du système de transmission. Ainsi, les lames élastiques subissent un effort de flexion croissant lors du mouvement de la première partie d'accouplement de la position désaccouplée vers la position accouplée.

Selon un mode de réalisation, la zone d'appui est fixe axialement par rapport à la deuxième partie d'accouplement.

Selon un mode de réalisation, chacune des lames élastiques comporte une extrémité libre. De préférence, ladite lame élastique est en appui contre la zone d'appui du système de transmission par l'intermédiaire des extrémités des lames élastiques.

Selon un mode de réalisation, chaque lame élastique est ménagée dans une fenêtre formée dans le disque.

Selon un mode de réalisation, les lames élastiques sont régulièrement réparties autour de l'axe X afin de ne pas générer de balourd.

Selon un mode de réalisation, le dispositif d'accouplement comporte au moins deux lames élastiques et de préférence quatre lames élastiques régulièrement réparties autour de l'axe X et symétriques deux à deux par rapport à l'axe X.

Selon un mode de réalisation, les lames élastiques sont situées radialement à l'intérieur de la portion annulaire formant cible, ce qui permet de limiter l'encombrement radial du disque.

Selon un mode de réalisation, chaque lame élastique s'étend selon une direction présentant une composante circonférentielle autour de l'axe X. Ceci permet d'obtenir, pour un encombrement radial donné, des lames élastiques de plus grande longueur et, par conséquent de plus faible raideur.

Selon un mode de réalisation, le disque et les lames élastiques sont dimensionnés pour générer une raideur K1 s'opposant au déplacement axial de la première partie d'accouplement de la position désaccouplée vers la position accouplée qui est comprise entre 5 et 50 N/mm.

Selon un mode de réalisation, le premier élément comporte un boîtier à l'intérieur duquel est logé la deuxième partie d'accouplement, la première partie d'accouplement comportant une portion intérieure qui est logé à l'intérieur du boîtier, une portion extérieure qui est positionnée à l'extérieur du boîtier et une pluralités de portions de liaison qui relient axialement la portion intérieure et la portion extérieure de la première partie d'accouplement, chacune de portions de liaison passant au travers d'une ouverture traversante correspondante ménagée dans le boitier.

Selon un mode de réalisation, l'une des portions intérieur et extérieure de la première partie d'accouplement est annulaire et l'autre comporte des pattes s'étendant axialement dans le prolongement des portions de liaison.

Selon un mode de réalisation, le disque est disposé à l'extérieur du boîtier et est fixé à la portion extérieure de la première partie d'accouplement, chaque zone d'appui étant positionnée sur le boîtier.

Selon un mode de réalisation, le boitier comporte des plots faisant saillie axialement vers l'extérieur du boîtier en direction du disque, chaque plot présentant une extrémité formant l'une des zones d'appui. Ceci permet d'éviter de plier les lames élastiques lors de la fabrication du disque.

Selon un mode de réalisation, lorsque la première partie d'accouplement est en position désaccouplée, les lames élastiques s'étendent sensiblement dans le plan de la portion annulaire du disque formant cible.

Selon un mode de réalisation, les plots présentent une dimension axiale supérieure ou égale à la course de la première partie d'accouplement entre la position accouplée et la position désaccouplée.

Selon un mode de réalisation, le premier élément est un boitier de différentiel.

Selon un mode de réalisation, le deuxième élément comporte une couronne porteuse qui est guidée en rotation autour de l'axe X à l'intérieur du boîtier, deux engrenages satellites qui sont montés en rotation sur la couronne porteuse autour d'un axe Z perpendiculaire à l'axe X et deux engrenages planétaires qui sont mobiles en rotation autour de l'axe X, sont chacun en prises avec les deux engrenages satellites et sont chacun destinés à être solidaires en rotation d'un arbre de roue. Ainsi, le système de transmission forme un différentiel autorisant les arbres de roue à tourner à des vitesses différentes.

Selon un mode de réalisation, les deux engrenages satellites comportent chacun une denture conique qui engrène avec une denture conique complémentaire des deux engrenages planétaires.

Selon un mode de réalisation, la deuxième partie d'accouplement du dispositif d'accouplement est solidaire en rotation de la couronne porteuse par rapport à l'axe X. Ainsi, lorsque le dispositif d'accouplement est en position accouplée, le système de transmission distribue le couple provenant du moteur vers les deux arbres de roue. A l'inverse, la transmission du couple est interrompue entre le boitier et la couronne porteuse dans la position désaccouplée du dispositif d'accouplement.

Selon un mode de réalisation, la deuxième partie d'accouplement du dispositif d'accouplement est formée d'un seul tenant avec la couronne porteuse.

Selon un autre mode de réalisation, la deuxième partie d'accouplement est solidaire en rotation de l'un des engrenages planétaires. Dans un tel mode de réalisation, lorsque celui-ci est en position accouplée, le couple est transmis entre le premier élément et le deuxième élément via les engrenages mais la fonction différentielle est bloquée par le dispositif d'accouplement, ce qui empêche les arbres de roue de tourner à des vitesses différentes.

Selon un mode de réalisation, le disque comporte une pluralité de languettes de fixation qui sont fixées à la première partie d'accouplement.

Selon un mode de réalisation, chacune des languettes de fixation comporte une extrémité proximale reliée à la portion annulaire formant cible et une extrémité libre qui est fixée à la première partie d'accouplement.

Selon un mode de réalisation, chaque languette de fixation est ménagée dans une fenêtre formée dans le disque.

Selon un mode de réalisation, les languettes de fixation s'étendent radialement. De préférence, les languettes de fixation s'étendent radialement vers l'intérieur depuis un bord radialement externe des fenêtres.

Selon un mode de réalisation, les languettes de fixation sont régulièrement réparties autour de l'axe X afin de ne pas générer de balourd.

Selon un mode de réalisation, le dispositif d'accouplement comporte au moins deux languettes de fixation et de préférence quatre languettes de fixation régulièrement réparties autour de l'axe X et symétriques deux à deux par rapport à l'axe X.

Selon un mode de réalisation, les languettes de fixation sont situées radialement à l'intérieur de la portion annulaire formant cible, ce qui permet de limiter l'encombrement radial du disque.

Selon un mode de réalisation, les languettes de fixation sont fixées à la portion extérieure de la première partie d'accouplement, notamment à ses pattes.

Selon un mode de réalisation, la portion extérieure de la première partie d'accouplement comporte des pattes s'étendant axialement dans le prolongement des portions de liaison et passant au travers des fenêtres dans lesquelles s'étendent les languettes de fixation.

De préférence, chaque languette de fixation est située circonférentiellement entre deux lames élastiques. Il existe de préférence un cercle centré sur l'axe X coupant toutes les lames élastiques et toutes les languettes de fixation.

Selon un mode de réalisation l'extrémité libre de chacune des languettes de fixation est clipsée dans une rainure ménagée dans la première partie d'accouplement, notamment dans ses pattes. La rainure peut être creusée radialement.

Selon un autre mode de réalisation, l'extrémité libre de chacune des languettes de fixation est fixée par un organe de fixation, tel qu'une vis, à la première partie d'accouplement, en particulier à l'une de ses pattes.

Selon un mode de réalisation, le dispositif d'accouplement comporte en outre un actionneur comportant un carter destiné à être fixé au châssis du véhicule et un piston mobile axialement par rapport au carter entre une position rétractée et une position déployée et le piston étant en appui contre une zone d'actionnement du disque de manière que le déplacement du piston de la position rétractée vers la position déployée entraîne le mouvement de la première partie d'accouplement du dispositif d'accouplement de la position désaccouplée vers la position accouplée. Ainsi, le disque permet également de transmettre l'effort d'actionnement entre l'actionneur et la première partie d'accouplement, ce qui permet de diminuer encore davantage le coût, la complexité et l'encombrement du système de transmission.

Selon un mode de réalisation, l'actionneur comportant un électro-aimant définissant un logement à l'intérieur duquel le piston est mobile axialement entre la position rétractée et la position déployée, le piston comportant un corps annulaire en matériau ferromagnétique. Un tel actionneur électro-magnétique est particulièrement avantageux en ce qu'il présente une excellente réactivité.

Selon un mode de réalisation, l'actionneur comporte un embout paramagnétique qui est fixé au corps du piston et qui coopère avec la zone d'actionnement du disque. Ceci évite les fuites indésirables de flux magnétiques.

Selon un mode de réalisation, l'actionneur comporte un capot magnétique contre lequel le corps du piston vient en butée lorsque le piston est en position déployée. Ainsi, le capot magnétique assure le maintien du piston dans la position déployée, ce qui permet de mettre hors tension l'électro-aimant.

Selon un mode de réalisation, le capot magnétique comporte un épaulement contre lequel vient en butée un épaulement du corps du piston lorsque le piston est en position déployée.

Selon un mode de réalisation, le disque est apte à se déformer élastiquement entre la zone d'actionnement et la zone de fixation du disque lors du mouvement du piston de l'actionneur de la position rétractée vers la position déployée. Ainsi, le disque permet également de compenser les tolérances de fabrication du dispositif d'accouplement.

Selon un mode de réalisation, la zone d'actionnement du disque est écartée d'une zone de butée de la première partie d'accouplement par un jeu axial qui est dimensionné de sorte que la disque se déforme lors du mouvement du piston de l'actionneur de la position rétractée vers la position déployée afin de rattraper des tolérances axiales de fabrication du dispositif d'accouplement et que la zone d'actionnement du disque vienne en butée contre la zone de butée de la première partie d'accouplement lorsque lesdites tolérances axiales de fabrication du dispositif d'accouplement ont été rattrapées.

Selon un mode de réalisation, le jeu axial est compris entre 0.2 et 1.5 mm.

Selon un mode de réalisation, le disque est dimensionné pour générer une raideur K2 s'opposant à un rapprochement axial du piston vers la première partie d'accouplement qui est comprise entre 50 et 500 N/mm.

La raideur K2 est supérieure à la raideur K1. De manière avantageuse, la raideur K2 est comprise entre 4*K1 et 20*K1 par exemple 10*K1.

Selon un mode de réalisation, la zone d'actionnement du disque est une portion annulaire interne. Ceci permet de limiter l'encombrement radial du dispositif d'accouplement.

Selon un mode de réalisation, la portion annulaire interne comporte des rainures de passage d'huile. La présence d'huile permet de limiter les frottements susceptibles d'être générés entre le piston et le disque.

Selon un mode de réalisation, le dispositif d'accouplement est un dispositif à crabots, l'une des première et deuxième parties d'accouplement comportant des dents et l'autre comportant des rainures correspondantes dans lesquelles sont engagées lesdites dents lorsque la première partie d'accouplement est dans la position accouplée.

Selon un mode de réalisation, le dispositif d'accouplement est un dispositif de déconnexion apte à interrompre sélectivement la transmission du couple entre le premier élément et le deuxième élément.

Selon un mode de réalisation, l'invention concerne également un véhicule automobile et un système de transmission précité.

Selon un mode de réalisation, le véhicule automobile comporte une machine électrique et le premier élément du système de transmission est apte à être entrainé par la machine électrique.

La machine électrique et le système de transmission peuvent être intégrés au sein d'un essieu électrique.

Selon un deuxième aspect, l'invention fournit également un système de transmission pour un véhicule automobile comprenant :
- un premier élément et un deuxième élément mobiles en rotation l'un par rapport à l'autre autour d'un axe X, l'un des premier et deuxième éléments étant destiné à être entrainé par un moteur et l'autre des premier et deuxième éléments étant destiné à entraîner au moins un arbre de roue du véhicule automobile ; et
- un dispositif d'accouplement qui comporte :
   - une première partie d'accouplement qui est solidaire en rotation du premier élément et une deuxième partie d'accouplement qui est solidaire en rotation du deuxième élément, la première partie d'accouplement étant mobile par rapport au premier élément entre une position accouplée dans laquelle la première partie d'accouplement est accouplée avec la deuxième partie d'accouplement pour transmettre un couple entre le premier élément et le deuxième et une position désaccouplée dans laquelle la première partie d'accouplement et la deuxième partie d'accouplement sont désaccouplées l'une de l'autre,
   - un organe de transmission qui comporte une zone de fixation qui est fixée axialement à la première partie d'accouplement,
   - un actionneur comportant un carter destiné à être fixé au châssis du véhicule et un piston mobile axialement par rapport au carter entre une position rétractée et une position déployée, le piston étant en appui contre une zone d'actionnement de l'organe de transmission de manière que le déplacement du piston de la position rétractée vers la position déployée entraîne le mouvement de la première partie d'accouplement du dispositif d'accouplement de la position désaccouplée vers la position accouplée, l'organe de transmission étant apte à se déformer élastiquement entre la zone d'actionnement et la zone de fixation de l'organe de transmission lors du mouvement du piston de l'actionneur de la position rétractée vers la position déployée.

Ainsi, l'organe de transmission permet de compenser les tolérances de fabrication du dispositif d'accouplement.

De préférence, l'organe de transmission est un disque. Une portion externe peut former une cible de capteur.

Ce deuxième aspect de l'invention peut comporter une ou plusieurs des caractéristiques mentionnées dans le cadre du premier aspect de l'invention.

Selon un troisième aspect, l'invention fournit également un système de transmission pour un véhicule automobile comprenant :
- un premier élément et un deuxième élément mobiles en rotation l'un par rapport à l'autre autour d'un axe X, l'un des premier et deuxième éléments étant destiné à être entrainé par un moteur et l'autre des premier et deuxième éléments étant destiné à entraîner au moins un arbre de roue du véhicule automobile ; et
- un dispositif d'accouplement qui comporte :
   - une première partie d'accouplement qui est solidaire en rotation du premier élément et une deuxième partie d'accouplement qui est solidaire en rotation du deuxième élément, la première partie d'accouplement étant mobile par rapport au premier élément entre une position accouplée dans laquelle la première partie d'accouplement est accouplée avec la deuxième partie d'accouplement pour transmettre un couple entre le premier élément et le deuxième et une position désaccouplée dans laquelle la première partie d'accouplement et la deuxième partie d'accouplement sont désaccouplées l'une de l'autre,
   - un disque qui comporte une zone de fixation qui est fixée axialement à la première partie d'accouplement et une portion annulaire formant cible,
   - un actionneur comportant un carter destiné à être fixé au châssis du véhicule et un piston mobile axialement par rapport au carter entre une position rétractée et une position déployée, le piston étant en appui contre une zone d'actionnement du disque de manière que le déplacement du piston de la position rétractée vers la position déployée entraîne le mouvement de la première partie d'accouplement du dispositif d'accouplement de la position désaccouplée vers la position accouplée.

Ainsi, le disque présente une double fonctionnalité, à savoir, d'une part, former la cible dont la position est détectée par un capteur de manière à délivrer un signal indiquant la position de la première partie du dispositif d'accouplement et, d'autre part, transmettre l'effort d'actionnement entre le piston de l'actionneur et la première partie d'accouplement, ce qui permet de diminuer le coût, la complexité et l'encombrement du système de transmission.

Ce troisième aspect de l'invention peut comporter une ou plusieurs des caractéristiques mentionnées dans le cadre du premier aspect de l'invention.

Notamment, le disque est apte à se déformer élastiquement entre la zone d'actionnement et la zone de fixation du disque lors du mouvement du piston de l'actionneur de la position rétractée vers la position déployée.

Selon un quatrième aspect, l'invention fournit également un système de transmission pour un véhicule automobile comprenant :
- un premier élément et un deuxième élément mobiles en rotation l'un par rapport à l'autre autour d'un axe X, l'un des premier et deuxième éléments étant destiné à être entrainé par un moteur et l'autre des premier et deuxième éléments étant destiné à entraîner au moins un arbre de roue du véhicule automobile ; et
- un dispositif d'accouplement qui comporte :
   - une première partie d'accouplement qui est solidaire en rotation du premier élément et une deuxième partie d'accouplement qui est solidaire en rotation du deuxième élément, la première partie d'accouplement étant mobile par rapport au premier élément entre une position accouplée dans laquelle la première partie d'accouplement est accouplée avec la deuxième partie d'accouplement pour transmettre un couple entre le premier élément et le deuxième et une position désaccouplée dans laquelle la première partie d'accouplement et la deuxième partie d'accouplement sont désaccouplées l'une de l'autre,
   - un organe de transmission qui comporte une zone de fixation qui est fixée axialement à la première partie d'accouplement, l'organe de transmission comportant une portion élastique de rappel qui est configurée pour se déformer élastiquement lors du mouvement de la première partie d'accouplement de la position désaccouplée vers la position accouplée et exercer un effort de rappel apte à rappeler élastiquement la première partie d'accouplement vers la position désaccouplée ,
   - un actionneur comportant un carter destiné à être fixé au châssis du véhicule et un piston mobile axialement par rapport au carter entre une position rétractée et une position déployée, le piston est en appui contre une zone d'actionnement de l'organe de transmission de manière que le déplacement du piston de la position rétractée vers la position déployée entraîne le mouvement de la première partie d'accouplement du dispositif d'accouplement de la position désaccouplée vers la position accouplée .

Ainsi, l'organe de transmission présente une double fonctionnalité, à savoir, d'une part, assurer le rappel de la première partie d'accouplement vers sa position désaccouplée et, d'autre part, transmettre l'effort d'actionnement entre le piston de l'actionneur et la première partie d'accouplement, ce qui permet de diminuer le coût, la complexité et l'encombrement du système de transmission.

Ce quatrième aspect de l'invention peut comporter une ou plusieurs des caractéristiques mentionnées dans le cadre du premier aspect de l'invention.

Notamment, l'organe de transmission est apte à se déformer élastiquement entre la zone d'actionnement et la zone de fixation du disque lors du mouvement du piston de l'actionneur de la position rétractée vers la position déployée. On a ainsi deux raideurs élastiques distinctes assurant d'une part le rappel élastique de la première partie d'accouplement et permettant d'autre part la compensation des tolérances de la chaine de cote.

De préférence, l'organe de transmission est un disque. Une portion externe de ce disque peut former une cible de capteur.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue d'ensemble, en coupe, d'un système de transmission équipé d'un dispositif d'accouplement selon un premier mode de réalisation.
[fig.2] La figure 2 est une vue en coupe brisée à plans sécants du système de transmission de la figure 1 lorsque le dispositif d'accouplement est en position désaccouplée.
[fig.3] La figure 3 est une vue en coupe analogue à celle de la figure 2 lorsque le dispositif d'accouplement est en position accouplée.
[fig.4] La figure 4 est une vue latérale partielle du dispositif d'accouplement des figures 1 à 3 illustrant le disque et la première partie d'accouplement du dispositif d'accouplement.
[fig.5] La figure 5 est une vue en coupe brisée à plans sécants selon les plans de coupe V-V de la figure 4, illustrant notamment, le boîtier, le disque et la première partie d'accouplement du dispositif d'accouplement.
[fig.6] La figure 6 est une vue latérale partielle d'un dispositif d'accouplement selon une variante de réalisation illustrant le boîtier, le disque et première partie d'accouplement du dispositif d'accouplement.
[fig.7] La figure 7 est une vue en coupe brisée à plans sécants, selon les plans de coupe VII-VII de la figure 6.

### Description des modes de réalisation

Dans la description et les revendications, on utilisera, les termes "externe" et "interne" ainsi que les orientations "axiale" et "radiale" pour désigner, selon les définitions données dans la description, des éléments du système de transmission. Par convention, l'orientation "radiale" est dirigée orthogonalement à l'axe X de rotation du système de transmission déterminant l'orientation "axiale" et, de l'intérieur vers l'extérieur en s'éloignant dudit axe, l'orientation "circonférentielle" est dirigée orthogonalement à l'axe X et orthogonalement à la direction radiale.

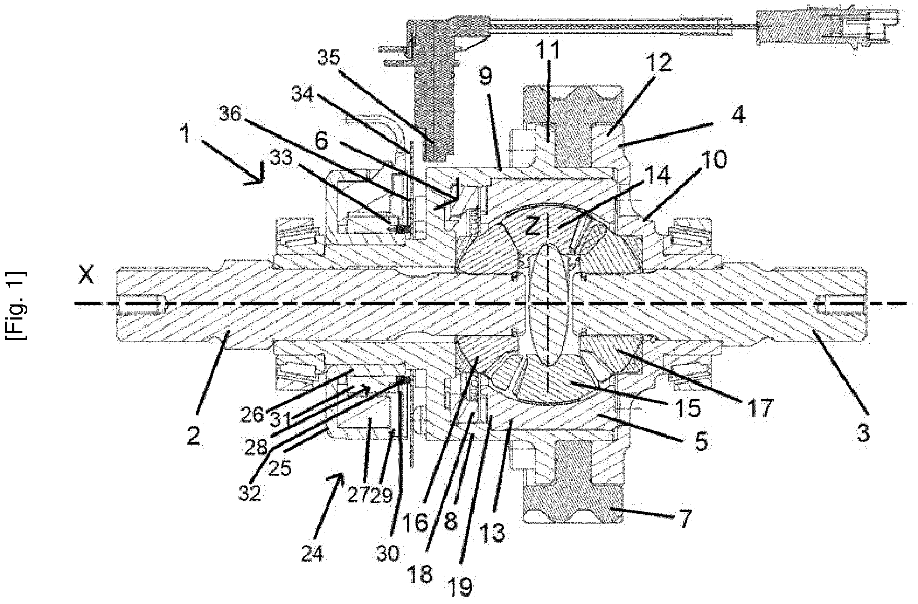

Les figures 1 à 5 illustrent un système de transmission 1 selon un premier mode de réalisation. Le système de transmission est ici un différentiel qui est utilisé, dans une chaîne de transmission d'un véhicule, pour transmettre et distribuer un couple provenant d'un moteur, non illustré, vers deux arbres de roue 2, 3 d'un essieu d'un véhicule automobile. Un tel système de transmission peut, par exemple, faire partie d'une chaîne de transmission secondaire apte à transmettre un couple d'un moteur secondaire du véhicule, tel qu'un moteur électrique, vers un essieu arrière ou avant d'un véhicule tandis qu'une chaîne de transmission primaire est apte à transmettre un couple d'un moteur principal, par exemple un moteur thermique, vers les arbres de roue d'un autre essieu du véhicule. Selon d'autres modes de réalisation non illustrés, le système de transmission peut également prendre une autre forme que celle d'un différentiel.

Le système de transmission comporte un premier élément 4, mobile en rotation autour de l'axe X, et destiné à être entrainé par un moteur, tel qu'un moteur électrique non représenté, un deuxième élément 5, également mobile en rotation autour de l'axe X et destiné à entraîner les arbres de roue 2, 3, et un dispositif d'accouplement 6 apte à sélectivement accoupler ou désaccoupler le premier élément 4 et le deuxième élément 5.

Le premier élément 4 comporte une roue dentée 7 qui est destinée à être entrainée par le moteur par l'intermédiaire d'un train d'engrenage réducteur, non représenté. Ce premier élément 4 comprend aussi un boîtier 8 qui est fixé solidaire en rotation de la roue dentée 7. Le boîtier 8 comporte deux parties 9, 10 qui sont fixées l'une à l'autre. Pour ce faire, dans le mode de réalisation représenté, chacune des deux parties 9, 10 comporte une bride externe 11, 12 par laquelle les deux parties 9, 10 sont fixées à la roue dentée 7 et l'une à l'autre.

Le deuxième élément 5 comporte une couronne porteuse 13 de forme annulaire qui est guidée en rotation, autour de l'axe X, à l'intérieur du boîtier 8. Pour ce faire, le boitier 8 comporte une portion cylindrique interne coopérant avec une surface externe cylindrique de la couronne porteuse 13 afin de la guider en rotation par rapport au boîtier 8. Le deuxième élément 5 comporte en outre deux engrenages satellites 14, 15, visibles sur la figure 1, qui sont montés en rotation sur la couronne porteuse 13 autour d'un axe Z, perpendiculaire à l'axe X. Les deux engrenages satellites 14, 15 comportent chacun une denture conique qui engrène avec une denture conique complémentaire de deux engrenages planétaires 16, 17. Les deux engrenages planétaires 16, 17 sont mobiles en rotation autour de l'axe X et sont chacun solidaires en rotation de l'un des deux axes de roue 2, 3. La couronne porteuse 13, les engrenages satellites 14, 15 et les engrenages planétaires 16, 17 forment un différentiel permettant aux deux arbres de roue 2, 3 de tourner à des vitesses différentes.

Par ailleurs, le système de transmission 1 comporte un dispositif d'accouplement 6 qui, dans la position accouplée permet de transmettre un couple entre le premier élément 4 et l'un des éléments du deuxième élément 5, ici la couronne porteuse 13. Ainsi, le système de transmission permet, lorsque le dispositif d'accouplement 6 est en position accouplée de transmettre un couple du moteur vers les arbres de roue 2, 3 en exerçant la fonction de différentiel autorisant des vitesses de rotation différentes des arbres de roue 2, 3. Toutefois, dans un autre mode de réalisation non représenté, le dispositif d'accouplement est configuré pour accoupler le premier élément 4 avec l'un des deux engrenages planétaires 16, 17. Les engrenage planétaire 16, 17 ont alors deux jeux de denture, de préférence axialement dos à dos. L'un coopère avec les pignons satellites, l'autre coopère avec la première partie d'accouplement. Dans un tel mode de réalisation, la couronne porteuse 13 est solidaire en rotation du boîtier 8 et le dispositif d'accouplement vise alors à interdire que les deux arbres de roue 2, 3 tournent à des vitesses différentes.

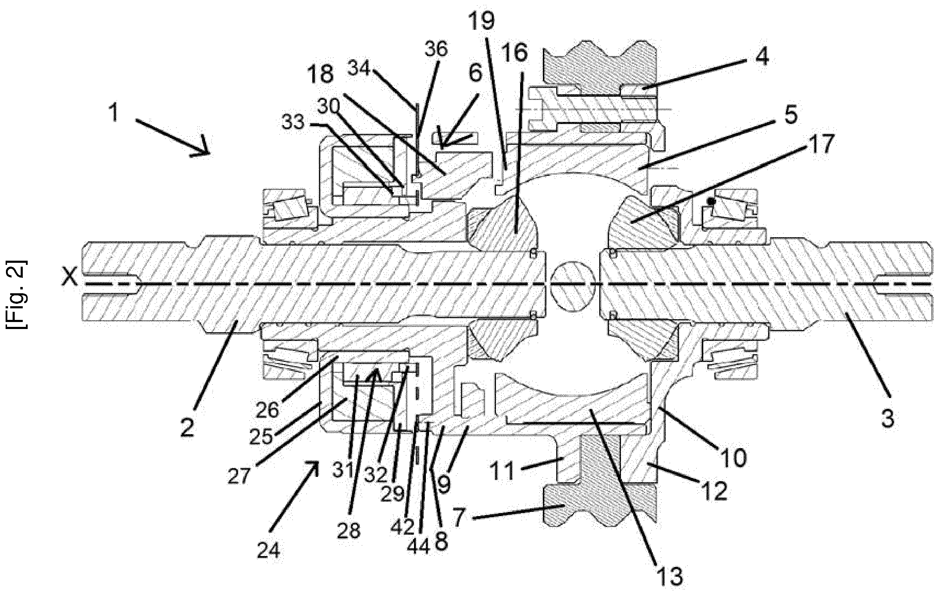

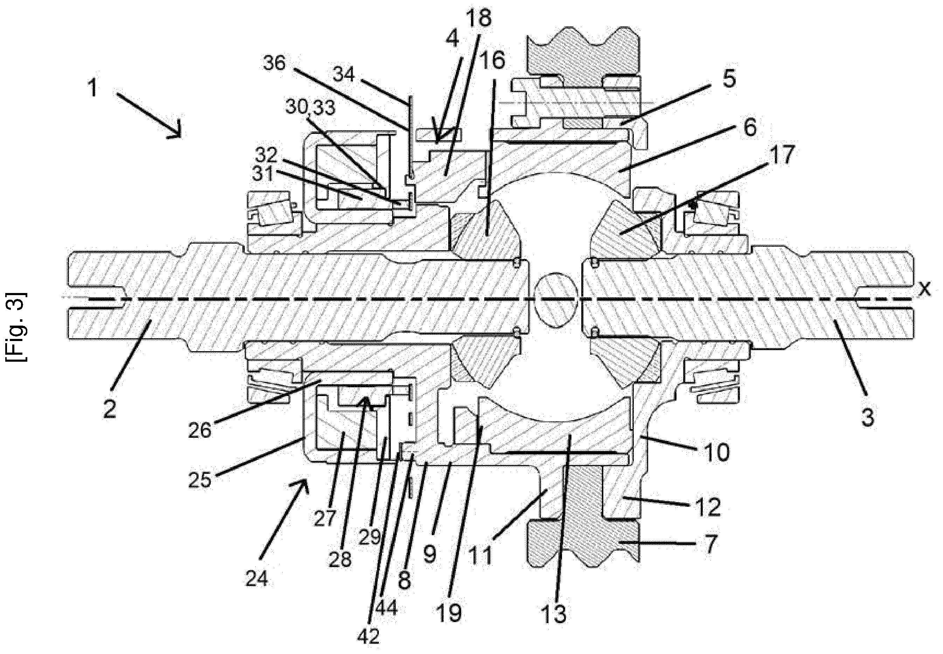

En revenant au mode de réalisation représenté, on observe que le dispositif d'accouplement 6 comporte une première partie d'accouplement 18 qui est solidaire en rotation du boîtier 8 tout en étant mobile axialement le long de l'axe X par rapport audit boitier 8. La première partie d'accouplement 18 est mobile entre une position désaccouplée, représentée sur la figure 2, et une position accouplée, représentée sur la figure 3. Dans la position désaccouplée, la première partie d'accouplement 18 est désaccouplée d'une deuxième partie d'accouplement 19 solidaire en rotation de la couronne porteuse 13 de sorte que la transmission de couple est interrompue entre le boitier 8 et la couronne porteuse 13. Au contraire, dans la position accouplée, la première partie d'accouplement 18 est accouplée à la deuxième partie d'accouplement 19, ce qui permet la transmission du couple entre le boîtier 8 et la couronne porteuse 13.

Dans le mode de réalisation représenté, le dispositif d'accouplement 6 est un dispositif à crabot. Ainsi, l'une de première et deuxième partie d'accouplement 18, 19 comporte des dents tandis que l'autre comporte des rainures correspondantes dans lesquelles sont engagées lesdites dents lorsque la première partie d'accouplement 18 est en position accouplée. Dans le mode de réalisation représenté, la deuxième partie d'accouplement 19 est formée d'un seul tenant avec la couronne porteuse 13. En d'autres termes, des dents ou des rainures sont ménagées dans la face latérale de la couronnée porteuse 13 qui est tournée en regard de la première partie d'accouplement 18. Toutefois, bien que l'invention soit décrite en liaison avec un dispositif d'accouplement à crabots, elle n'y est pas limitée et le dispositif d'accouplement pourra être d'un autre type et notamment être un dispositif d'accouplement par friction.

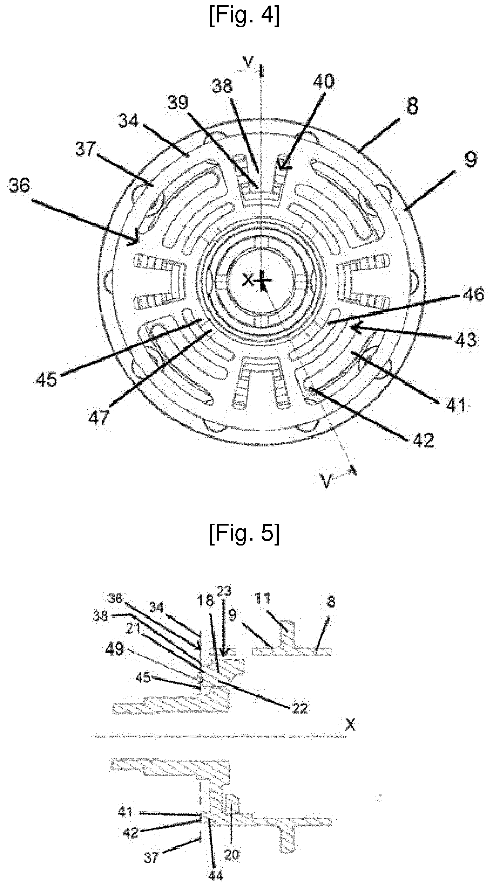

Comme représenté sur la figure 5, la première partie d'accouplement 18 comporte une portion intérieure 20 qui est logée à l'intérieur du boîtier 8, une portion extérieure 21 qui est positionnée à l'extérieur du boîtier 8 et des portions de liaison 22 qui sont régulièrement réparties autour de l'axe X et qui passent chacune au travers d'une ouverture traversante 23 correspondante ménagée dans le boîtier 8, ce qui permet de solidariser en rotation la première partie d'accouplement 18 au boîtier 8 tout en permettant un déplacement axial relatif entre la première partie d'accouplement 18 et le boîtier 8. Dans le mode de réalisation représenté, la portion intérieure 20 est annulaire tandis que la portion extérieure 21 comporte des pattes s'étendant axialement dans le prolongement des portions de liaison 22. Toutefois, selon une autre variante de réalisation, la structure est inversée et la portion extérieure 21 est annulaire tandis que la portion intérieure 20 comporte une pluralité de pattes d'orientation axiale s'étendant dans le prolongement des portions de liaison 22.

Par ailleurs, le dispositif d'accouplement 6 comporte un actionneur 24, illustré sur les figures 1 à 3, permettant de déplacer axialement la première partie d'accouplement 18. L'actionneur 24 comporte un carter 25 qui est destiné à être monté sur le châssis du véhicule, fixe en rotation par rapport à celui-ci, au moyen d'organes de fixation non illustrés. Le carter 25 comporte une jupe interne 26 qui est emmanchée autour d'une portion de la partie 9 du boîtier 8. La jupe interne 26 comporte une portion cylindrique de guidage qui coopère avec une portion cylindrique correspondante du boîtier 8 et autorise ainsi la rotation du boîtier 8 par rapport au carter 25 fixe de l'actionneur 24.

L'actionneur 24 est un actionneur électro-magnétique. Il comporte un électro-aimant 27 définissant un logement interne et un piston 28 mobile axialement à l'intérieur du logement interne entre une position rétractée, illustrée sur la figure 2, et une position déployée, illustrée sur la figure 3. L'actionneur 24 comporte en outre un capot magnétique 29 qui ferme le logement interne et qui comporte une butée 30, tel qu'un épaulement, pour définir la position déployée du piston 28. Le piston 28 comporte un corps 31, de forme annulaire, en matériau ferromagnétique, tel que du fer ou de l'acier par exemple. Le piston 28 comporte en outre un embout paramagnétique 32, également de forme annulaire, qui est fixé au corps 31 du piston 28 et par lequel l'effort d'actionnement est transmis à la première partie d'accouplement 18. L'embout paramagnétique 32 du piston 28 permet ainsi d'éviter des fuites indésirables de flux magnétiques vers les autres composant du dispositif d'accouplement 6. Par ailleurs, le corps 31 du piston 28 comporte un épaulement 33 destiné à venir en butée contre l'épaulement 30 du capot magnétique 29 lorsque la piston 28 est en position déployée.

Lorsque l'électro-aimant 27 est mis sous tension avec une intensité supérieure à une intensité seuil, il permet de déplacer le piston 28 de la position rétractée, illustrée sur la figure 2, vers la position déployée, illustrée sur la figure 3. Lorsque le piston 28 est en position déployée, le capot magnétique 29 exerce une attraction sur le corps 31 du piston 28, ce qui permet de le maintenir en position déployée. L'intensité d'alimentation de l'électro-aimant 27 peut alors être diminué tant qu'elle reste supérieure à ladite intensité seuil. Lorsque l'électro-aimant 27 est mis hors-tension ou qu'il est alimenté avec une intensité inférieure à l'intensité seuil, un moyen de rappel élastique, décrit par la suite, qui rappelle la première partie d'accouplement 18 vers la position désaccouplée, permet de vaincre la force d'attraction entre le capot magnétique 29 et le corps 31 du piston 28 et pour rappeler le piston 28 de la position déployée vers la position rétractée.

Le dispositif d'accouplement 6 est également équipé d'une cible 34 qui est fixée axialement à la première partie d'accouplement 18. Par ailleurs, le dispositif d'accouplement 6 comporte un capteur 35 sans contact, représenté sur la figure 1, qui est positionné axialement en regard de la cible 34 et qui est configuré pour délivrer un signal représentatif de la distance axiale entre la cible 34 et le capteur 35. Ainsi, le capteur 35 est apte à délivrer un signal représentatif de la position de la première partie d'accouplement 18, un tel signal étant utilisé pour assurer la fiabilité de la commande du dispositif d'accouplement 6 et notamment pour vérifier que le dispositif d'accouplement 6 est bien en position désaccouplée ou en position accouplée. Le capteur 34 est par exemple un capteur à effet hall.

Par ailleurs, le dispositif d'accouplement 6 comporte un disque 36, visible en intégralité sur la figure 4, qui est formé d'un seul tenant et est fixé axialement à la première partie d'accouplement 18. Le disque 36 assure de nombreuses fonctionnalités décrites ci-dessous et permet ainsi de limiter le coût, la complexité et l'encombrement du dispositif d'accouplement 6.

En premier lieu, le disque 36 assure la fonction de cible 34. Pour ce faire, le disque comporte une portion annulaire 37, ménagée à la périphérie radialement externe du disque 36. Cette portion annulaire 37 est disposée axialement en regard du capteur 35 et forme ainsi la cible 34.

En deuxième lieu, le disque 36 exerce la fonction de moyen de rappel élastique permettant de rappeler la première partie d'accouplement 18 vers la position désaccouplée lorsque le piston 28 de l'actionneur 24 retourne vers la position rétractée.

Pour ce faire, le disque 36 comporte des lames élastiques 41, au nombre de quatre dans le mode de réalisation représenté. Les lames élastiques 41 présentent chacune une extrémité libre 42 qui est en appui contre une zone d'appui du boitier 8 et une extrémité proximale reliée au reste du disque 36. Les lames élastiques 41 sont chacune ménagées dans des fenêtres 43 positionnées radialement à l'intérieur de la portion annulaire 37. Les lames élastiques 41 s'étendent circonférentiellement autour de l'axe X, ce qui permet d'obtenir, pour un encombrement radial donné, des lames élastiques 41 de plus grande longueur et, par conséquent de plus faible raideur. Comme représenté sur les figures 2, 3 et 5, l'extrémité libre 42 des lames élastiques 41 est en appui contre les extrémités de plots 44 faisant saillie axialement depuis le boîtier 8 vers le disque 36. Les plots 44 font saillie d'une dimension axiale supérieure à la course de la première partie d'accouplement 18 entre la position désaccouplée et la position accouplée. De manière avantageuse, comme représenté sur la figure 3, la dimension axiale des plots 44 est telle que, lorsque le dispositif d'accouplement 6, est en position désaccouplée, les lames élastiques 41 s'étendent sensiblement dans le plan de la portion annulaire 37 formant cible 34.

Les lames élastiques 41 forment ainsi chacune une portion élastique de rappel qui est configurée pour fléchir élastiquement lors du mouvement de la première partie d'accouplement 18 de la position désaccouplée vers la position accouplée. En réaction, les lames élastiques 41 exercent un effort de rappel apte à rappeler ladite première partie d'accouplement 18 vers la position désaccouplée.

Par ailleurs, le disque 36 comporte une pluralité de languettes de fixation 38, visibles sur la figure 4, également au nombre de quatre dans le mode de réalisation représenté. Les languettes de fixation 38 sont circonférentiellement réparties autour de l'axe X et comportent chacune une extrémité libre 39 définissant une zone de fixation qui est fixée à la portion extérieure 21 de la première partie d'accouplement 18. Les languettes de fixation 37 sont ménagées dans des fenêtres 40 formées dans une portion du disque 36 disposée radialement à l'intérieur de la portion annulaire 37 formant cible 34. Chacune des fenêtre 40 associée aux languettes est ainsi disposée circonférentiellement entre deux fenêtres 43 associées aux lames élastiques. Les languettes de fixation 38 font saillie radialement vers l'intérieur depuis un bord radialement externe desdites fenêtres 40. Par ailleurs, les pattes de la portion extérieure 21 passent au travers desdites fenêtres 40. En outre, comme représenté sur les figures 2, 3 et 4, les pattes de la portion extérieure 21 comportent chacune une rainure dans laquelle est clipsée l'extrémité libre 39 de l'une des languettes de fixation 38, ce qui permet de fixer le disque 36 à la première partie d'accouplement 18, simplement, sans organe de fixation additionnel.

A titre d'exemple, selon un mode de réalisation, le disque 36 et plus particulièrement les languettes de fixation 38 et les lames élastiques 41 sont dimensionnés pour générer une raideur K1 s'opposant au déplacement axial de la première partie d'accouplement 18 vers la position accouplée comprise entre 5 et 50 N/mm.

En troisième lieu, le disque 36 permet également de transmettre l'effort d'actionnement entre le piston 28 de l'actionneur 24 et la première partie d'accouplement 18. Pour ce faire, le piston 28 de l'actionneur 24 est en contact contre une portion annulaire interne 45 du disque 36 qui définit une zone d'actionnement. Par ailleurs, le disque 36 est apte à se déformer élastiquement entre ladite zone d'actionnement et les extrémités libres 39 des languettes de fixation 38 lorsque le piston 28 de l'actionneur 24 est déplacé de la position rétractée vers la position déployée. Ceci permet de compenser les tolérances de la chaîne de côtes du dispositif d'accouplement 6 en garantissant que le piston 28 comme la première partie d'accouplement 18 se déplacent sur l'intégralité de leur course lors de leur déplacement respectif vers la position déployée et la position accouplée. En d'autres termes, ceci permet de garantir à la fois que le piston 28 soit, en position déployée, en butée contre le capot magnétique 29 de l'actionneur 24, et que la première partie d'accouplement 18 soit, en position accouplée, en butée axialement contre la deuxième partie d'accouplement 19. Comme représenté sur la figure 5, la portion annulaire interne 45 du disque 36 est écartée d'une zone de butée de la première partie d'accouplement 18 par un jeu axial 49 qui est supérieur aux tolérances axiales de fabrication du dispositif d'accouplement 6. Le jeu axial 49 est, par exemple, compris entre 0.2 et 1.5 mm. Ainsi, lors du mouvement du piston 28 de l'actionneur 24 de la position rétractée vers la position déployée, le disque 36 et notamment sa portion annulaire interne 45 se déforme afin de rattraper des tolérances axiales de fabrication du dispositif d'accouplement puis la portion annulaire interne 45 du disque 36 vient en butée contre la zone de butée de la première partie d'accouplement 18 lorsque lesdites tolérances axiales de fabrication du dispositif d'accouplement 6 ont été rattrapées.

Selon une réalisation avantageuse, le disque 36 présente des découpes 46, notamment représentées sur la figure 4, s'étendant circonférentiellement dans une zone positionnée radialement entre la portion annulaire interne 45 du disque 36 qui définit la zone d'actionnement et les fenêtres 43. De telles découpes 46 sont avantageuses en ce qu'elles augmentent encore davantage la flexibilité du disque 36.

A titre d'exemple, selon un mode de réalisation, le disque 36 est dimensionné pour générer une raideur K2 s'opposant à un rapprochement axial du piston 28 de l'actionneur 24 vers la première partie d'accouplement 18 qui est comprise entre 50 et 500 N/mm. La raideur K2 est supérieure à la raideur K1. De manière avantageuse, la raideur K2 est comprise entre 4*K1 et 20*K1.

En quatrième lieu, le disque 36 propose une interface de glissement limitant les efforts de frottement provoqués par la rotation relative du disque 36, qui est mobile en rotation autour de l'axe X, par rapport au piston 28 qui est lui fixe en rotation. Selon une variante avantageuse, afin de limiter encore davantage les frottements susceptibles d'être générés entre le piston 28 et le disque 36, la portion annulaire 45 du disque 36 comporte, sur sa face dirigée en regard du piston 28, des rainures 47 de passage d'huile, représentées sur la figure 4.

Le disque 36 est par exemple réalisé en acier à ressort, tel que l'acier XC 70, avantageusement pré-durci. A titre d'exemple, le disque 36 présente une épaisseur comprise entre 0.4 et 1,2 mm, par exemple de l'ordre de 0,8 mm. De manière alternative, le disque 36 est en acier inoxydable.

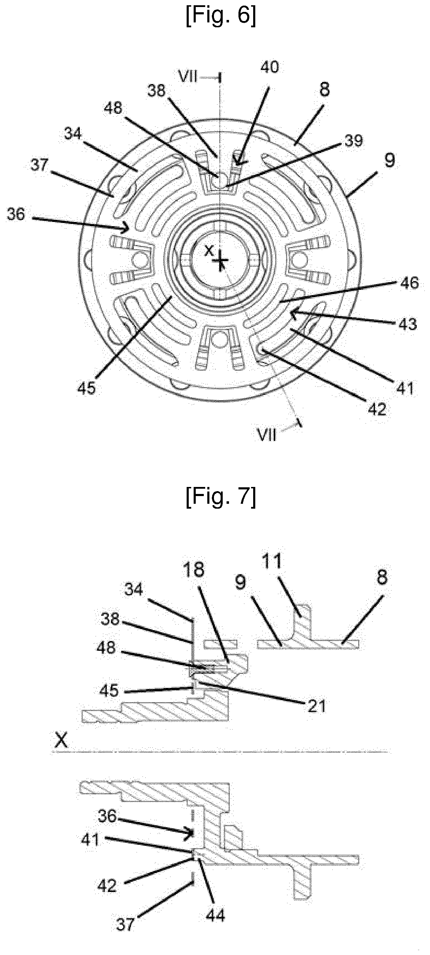

Les figures 6 et 7 représentent un dispositif d'accouplement 6 selon un autre mode de réalisation. Ce dispositif d'accouplement 6 ne diffère de celui décrit ci-dessus en relation avec les figures 1 à 5 que par le mode de fixation du disque 36 à la première partie d'accouplement 18. Dans ce mode de réalisation, l'extrémité libre 39 de chacune des languettes de fixation 38 est fixée par un organe de fixation 48, tel qu'une vis, à la portion extérieure 21 de la première partie d'accouplement 18, ce qui permet d'assurer une plus grande rigidité de la fixation du disque 36 à la première partie d'accouplement 18.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

Dans les revendications, tout signe de référence entre parenthèses ne saurait être interprété comme une limitation de la revendication.

## Revendications

1. Système de transmission (1) pour un véhicule automobile comprenant :
- un premier élément (4) et un deuxième élément (5) mobiles en rotation l'un par rapport à l'autre autour d'un axe X, l'un des premier et deuxième éléments (4, 5) étant destiné à être entrainé par un moteur et l'autre des premier et deuxième éléments (4, 5) étant destiné à entraîner au moins un arbre de roue (2, 3) du véhicule automobile ; et
- un dispositif d'accouplement (6) qui comporte :
- une première partie d'accouplement (18) qui est solidaire en rotation du premier élément (4) et une deuxième partie d'accouplement (19) qui est solidaire en rotation du deuxième élément (5), la première partie d'accouplement (18) étant mobile par rapport au premier élément (4) entre une position accouplée dans laquelle la première partie d'accouplement (18) est accouplée avec la deuxième partie d'accouplement (19) pour transmettre un couple entre le premier élément (4) et le deuxième élément (5) et une position désaccouplée dans laquelle la première partie d'accouplement (18) et la deuxième partie d'accouplement (19) sont désaccouplées l'une de l'autre,
**caractérisé en ce que** le système de transmission (1) comprend en outre:
- un disque (36) qui comporte une zone de fixation qui est fixée axialement à la première partie d'accouplement (18), le disque (36) comportant une portion annulaire (37) formant cible (34) et au moins une portion élastique de rappel (41) qui est configurée pour se déformer élastiquement lors du mouvement de la première partie d'accouplement (18) de la position désaccouplée vers la position accouplée et exercer un effort de rappel apte à rappeler élastiquement la première partie d'accouplement (18) vers la position désaccouplée.

2. Système de transmission (1) selon la revendication 1, comprenant un capteur (35) qui est disposé en regard de la portion annulaire du disque (36) et qui est configuré pour délivrer un signal représentatif d'une distance entre le capteur (35) et la portion annulaire formant cible (34).

3. Système de transmission (1) selon la revendication 1 ou 2, dans lequel le disque (36) comporte une pluralité de portions élastiques de rappel comportant chacune une lame élastique (41) apte à venir en appui contre une zone d'appui du système de transmission (1), ladite zone d'appui étant fixe axialement par rapport à la deuxième partie d'accouplement (5).

4. Système de transmission (1) selon l'une quelconque des revendications 1 à 3, dans lequel le premier élément (4) comporte un boîtier (8) à l'intérieur duquel est logé la deuxième partie d'accouplement (19), la première partie d'accouplement (18) comportant une portion intérieure (20) qui est logé à l'intérieur du boîtier (8), une portion extérieure (21) qui est positionnée à l'extérieur du boîtier (8) et une pluralités de portions de liaison (22) qui relient axialement la portion intérieure (20) et la portion extérieure (21) de la première partie d'accouplement (18), chacune de portions de liaison (22) passant au travers d'une ouverture traversante (23) correspondante ménagée dans le boitier (8).

5. Système de transmission (1) selon la revendication 4 prise en combinaison avec la revendication 3, dans lequel le disque (36) est disposé à l'extérieur du boîtier (8) et est fixé à la portion extérieure (21) de la première partie d'accouplement (18), chaque zone d'appui étant positionnée sur le boîtier (8), notamment le boitier (8) comporte des plots (44) faisant saillie axialement vers l'extérieur du boîtier (8) en direction du disque (36), chaque plot (44) présentant une extrémité formant l'une des zones d'appui.

6. Système de transmission (1) selon l'une quelconque des revendications 4 à 5, dans lequel le deuxième élément (5) comporte une couronne porteuse (13) qui est guidée en rotation autour de l'axe X à l'intérieur du boîtier (8), deux engrenages satellites (14, 15) qui sont montés en rotation sur la couronne porteuse (13) autour d'un axe Z perpendiculaire à l'axe X et deux engrenages planétaires (16, 17) qui sont mobiles en rotation autour de l'axe X, sont chacun en prises avec les deux engrenages satellites (14, 15) et sont chacun destinés à être solidaires en rotation d'un arbre de roue (2, 3), notamment la deuxième partie d'accouplement (19) du dispositif d'accouplement (6) est solidaire en rotation de la couronne porteuse (13) par rapport à l'axe X.

7. Système de transmission (1) selon l'une quelconque des revendications 1 à 6, dans lequel le disque (36) comporte une pluralité de languettes de fixation (38) qui sont fixées à la première partie d'accouplement (18).

8. Système de transmission (1) selon l'une quelconque des revendications 1 à 7, dans lequel le dispositif d'accouplement (6) comporte en outre un actionneur (24) comportant un carter (25) destiné à être fixé au châssis du véhicule et un piston (28) mobile axialement par rapport au carter (25) entre une position rétractée et une position déployée et dans lequel le piston (28) est en appui contre une zone d'actionnement du disque (36) de manière que le déplacement du piston(28) de la position rétractée vers la position déployée entraîne le mouvement de la première partie d'accouplement (18) du dispositif d'accouplement (6) de la position désaccouplée vers la position accouplée ; et dans lequel le disque (36) est apte à se déformer élastiquement entre la zone d'actionnement et la zone de fixation du disque (36) lors du mouvement du piston (28) de l'actionneur (24) de la position rétractée vers la position déployée.

9. Système de transmission selon la revendication 8, dans lequel la zone d'actionnement du disque (36) est écartée d'une zone de butée de la première partie d'accouplement (18) par un jeu axial (49) qui est dimensionné de sorte que la disque (36) se déforme lors du mouvement du piston (28) de l'actionneur (24) de la position rétractée vers la position déployée afin de rattraper des tolérances axiales de fabrication du dispositif d'accouplement (6) et que la zone d'actionnement du disque (36) vienne en butée contre la zone de butée de la première partie d'accouplement (18) lorsque lesdites tolérances axiales de fabrication du dispositif d'accouplement (6) ont été rattrapées.

10. Système de transmission (1) selon la revendication 8 ou 9, dans lequel le disque (36) est dimensionné pour générer une raideur s'opposant à un rapprochement axial du piston (28) vers la première partie d'accouplement (18) qui est comprise entre 50 et 500 N/mm.

11. Système de transmission (1) selon l'une quelconque des revendications 8 à 10, dans lequel la zone d'actionnement du disque (36) est une portion annulaire interne (45).

12. Système de transmission (1) selon la revendication 11, dans lequel la portion annulaire interne (45) comporte des rainures (47) de passage d'huile.

13. Système de transmission (1) selon l'une quelconque des revendications 1 à 12, dans lequel le dispositif d'accouplement (6) est un dispositif à crabots, l'une des première et deuxième parties d'accouplement (18, 19) comportant des dents et l'autre comportant des rainures correspondantes dans lesquelles sont engagées lesdites dents lorsque la première partie d'accouplement (18) est dans la position accouplée.

14. Système de transmission (1) selon l'une quelconque des revendications 1 à 13, dans lequel le dispositif d'accouplement est un dispositif de déconnexion apte à interrompre sélectivement la transmission du couple entre le premier élément et le deuxième élément.

15. Véhicule automobile comportant une machine électrique et un système de transmission (1) selon l'une quelconque des revendications 1 à 14, le premier élément du système de transmission étant entrainé par la machine électrique.

## Patentansprüche

1. Übertragungssystem (1) für ein Kraftfahrzeug, beinhaltend:
- ein erstes Element (4) und ein zweites Element (5), die relativ zueinander um eine X-Achse drehbeweglich sind, wobei eines von dem ersten und zweiten Element (4, 5) dazu bestimmt ist, von einem Motor angetrieben zu werden, und das andere von dem ersten und zweiten Element (4, 5) dazu bestimmt ist, mindestens eine Radachse (2, 3) des Kraftfahrzeugs anzutreiben; und
- eine Kupplungsvorrichtung (6), die Folgendes umfasst:
- einen ersten Kupplungsteil (18), der mit dem ersten Element (4) drehfest verbunden ist, und einen zweiten Kupplungsteil (19), der mit dem zweiten Element (5) drehfest verbunden ist, wobei der erste Kupplungsteil (18) in Bezug auf das erste Element (4) zwischen einer gekuppelten Position, in der der erste Kupplungsteil (18) mit dem zweiten Kupplungsteil (19) gekuppelt ist, um ein Drehmoment zwischen dem ersten Element (4) und dem zweiten Element (5) zu übertragen, und einer entkuppelten Position, in der der erste Kupplungsteil (18) und der zweite Kupplungsteil (19) voneinander entkuppelt sind, beweglich ist, **dadurch gekennzeichnet, dass** das Übertragungssystem (1) ferner Folgendes beinhaltet:
- eine Scheibe (36), die einen Befestigungsbereich umfasst, der axial an dem ersten Kupplungsteil (18) befestigt ist, wobei die Scheibe (36) einen ringförmigen Abschnitt (37), der eine Zielscheibe (34) bildet, und mindestens einen elastischen Rückstellabschnitt (41) umfasst, welcher dazu konfiguriert ist, sich bei der Bewegung des ersten Kupplungsteils (18) von der entkuppelten Position in die gekuppelte Position elastisch zu verformen und eine Rückstellkraft auszuüben, die dazu fähig ist, den ersten Kupplungsteil (18) in die entkuppelte Position elastisch zurückzustellen.

2. Übertragungssystem (1) nach Anspruch 1, beinhaltend einen Sensor (35), der gegenüber dem ringförmigen Abschnitt der Scheibe (36) angeordnet ist und dazu konfiguriert ist, ein Signal zu liefern, das für einen Abstand zwischen dem Sensor (35) und dem ringförmigen Abschnitt, der eine Zielscheibe (34) bildet, repräsentativ ist.

3. Übertragungssystem (1) nach Anspruch 1 oder 2, wobei die Scheibe (36) eine Vielzahl von elastischen Rückstellabschnitten umfasst, die jeweils eine elastische Zunge (41) umfassen, die dazu fähig ist, an einem Anlagebereich des Übertragungssystems (1) zur Anlage zu kommen, wobei der Anlagebereich in Bezug auf den zweiten Kupplungsteil (5) axial fest ist.

4. Übertragungssystem (1) nach einem der Ansprüche 1 bis 3, wobei das erste Element (4) ein Gehäuse (8) umfasst, in dessen Inneren der zweite Kupplungsteil (19) aufgenommen ist, wobei der erste Kupplungsteil (18) einen Innenabschnitt (20), der im Inneren des Gehäuses (8) aufgenommen ist, einen Außenabschnitt (21), der außerhalb des Gehäuses (8) positioniert ist, und eine Vielzahl von Verbindungsabschnitten (22), die den Innenabschnitt (20) und den Außenabschnitt (21) des ersten Kupplungsteils (18) axial verbinden, umfasst, wobei jeder der Verbindungsabschnitte (22) durch eine entsprechende Durchgangsöffnung (23) verläuft, die in dem Gehäuse (8) eingerichtet ist.

5. Übertragungssystem (1) nach Anspruch 4 in Kombination mit Anspruch 3, wobei die Scheibe (36) außerhalb des Gehäuses (8) angeordnet ist und an dem Außenabschnitt (21) des ersten Kupplungsteils (18) befestigt ist, wobei jeder Anlagebereich an dem Gehäuse (8) positioniert ist, das Gehäuse (8) insbesondere Nasen (44) umfasst, die zur Außenseite des Gehäuses (8) in Richtung der Scheibe (36) axial vorstehen, wobei jede Nase (44) ein Ende aufweist, das einen der Anlagebereiche bildet.

6. Übertragungssystem (1) nach einem der Ansprüche 4 bis 5, wobei das zweite Element (5) ein Hohlrad (13), das im Inneren des Gehäuses (8) um die X-Achse drehgeführt wird, zwei Satellitenräder (14, 15), die um eine Z-Achse, die zu der X-Achse senkrecht ist, drehbar an dem Hohlrad (13) gelagert sind, und zwei Planetenräder (16, 17), die um die X-Achse drehbeweglich sind, jeweils mit den zwei Satellitenrädern (14, 15) im Eingriff sind und jeweils dazu bestimmt sind, mit einer Radachse (2, 3) drehfest verbunden zu sein, umfasst, wobei insbesondere der zweite Kupplungsteil (19) der Kupplungsvorrichtung (6) in Bezug auf die X-Achse mit dem Hohlrad (13) drehfest verbunden ist.

7. Übertragungssystem (1) nach einem der Ansprüche 1 bis 6, wobei die Scheibe (36) eine Vielzahl von Befestigungslaschen (38) umfasst, die an dem ersten Kupplungsteil (18) befestigt sind.

8. Übertragungssystem (1) nach einem der Ansprüche 1 bis 7, wobei die Kupplungsvorrichtung (6) ferner ein Betätigungselement (24) umfasst, das eine Einhausung (25), die dazu bestimmt ist, an dem Fahrgestell des Fahrzeugs befestigt zu sein, und einen Kolben (28), der in Bezug auf die Einhausung (25) zwischen einer eingefahrenen Position und einer ausgefahrenen Position axial beweglich ist, umfasst, und wobei der Kolben (28) an einem Betätigungsbereich der Scheibe (36) derart anliegt, dass die Verschiebung des Kolbens (28) von der eingefahrenen Position in die ausgefahrene Position die Bewegung des ersten Kupplungsteils (18) der Kupplungsvorrichtung (6) von der entkuppelten Position in die gekuppelte Position bewirkt; und wobei die Scheibe (36) dazu fähig ist, sich bei der Bewegung des Kolbens (28) des Betätigungselements (24) von der eingefahrenen Position in die ausgefahrene Position zwischen dem Betätigungsbereich und dem Befestigungsbereich der Scheibe (36) elastisch zu verformen.

9. Übertragungssystem nach Anspruch 8, wobei der Betätigungsbereich der Scheibe (36) von einem Anschlagbereich des ersten Kupplungsteils (18) durch ein axiales Spiel (49) beabstandet ist, welches so ausgelegt ist, dass sich die Scheibe (36) bei der Bewegung des Kolbens (28) des Betätigungselements (24) von der eingefahrenen Position in die ausgefahrene Position verformt, um axiale Fertigungstoleranzen der Kupplungsvorrichtung (6) auszugleichen, und dass der Betätigungsbereich der Scheibe (36) an dem Anschlagbereich des ersten Kupplungsteils (18) zum Anschlag kommt, wenn die axialen Fertigungstoleranzen der Kupplungsvorrichtung (6) ausgeglichen wurden.

10. Übertragungssystem (1) nach Anspruch 8 oder 9, wobei die Scheibe (36) ausgelegt ist, um eine Steifigkeit, die einer axialen Annäherung des Kolbens (28) an den ersten Kupplungsteil (18) entgegenwirkt, zu erzeugen, die zwischen 50 und 500 N/mm beträgt.

11. Übertragungssystem (1) nach einem der Ansprüche 8 bis 10, wobei der Betätigungsbereich der Scheibe (36) ein ringförmiger Innenabschnitt (45) ist.

12. Übertragungssystem (1) nach Anspruch 11, wobei der ringförmige Innenabschnitt (45) Öldurchgangsnuten (47) umfasst.

13. Übertragungssystem (1) nach einem der Ansprüche 1 bis 12, wobei die Kupplungsvorrichtung (6) eine formschlüssige Vorrichtung ist, wobei einer von dem ersten und zweiten Kupplungsteil (18, 19) Zähne umfasst und der andere entsprechende Nuten umfasst, in die die Zähne eingreifen, wenn sich der erste Kupplungsteil (18) in der gekuppelten Position befindet.

14. Übertragungssystem (1) nach einem der Ansprüche 1 bis 13, wobei die Kupplungsvorrichtung eine Trennvorrichtung ist, die dazu fähig ist, die Übertragung des Drehmoments zwischen dem ersten Element und dem zweiten Element selektiv zu unterbrechen.

15. Kraftfahrzeug, das eine elektrische Maschine und ein Übertragungssystem (1) nach einem der Ansprüche 1 bis 14 umfasst, wobei das erste Element des Übertragungssystems durch die elektrische Maschine angetrieben wird.

## Claims

1. Transmission system (1) for a motor vehicle, comprising:
- a first element (4) and a second element (5) movable in rotation with respect to each other about an axis X, one of the first and second elements (4, 5) being intended to be driven by a motor and the other of the first and second elements (4, 5) being intended to drive at least one wheel shaft (2, 3) of the motor vehicle; and
- a coupling device (6) which comprises:
- a first coupling part (18) which is locked in rotation with the first element (4) and a second coupling part (19) which is locked in rotation with the second element (5), the first coupling part (18) being movable with respect to the first element (4) between a coupled position in which the first coupling part (18) is coupled to the second coupling part (19) to transmit a torque between the first element (4) and the second element (5) and a decoupled position in which the first coupling part (18) and the second coupling part (19) are decoupled from each other, **characterized in that** the transmission system (1) further comprises:
- a disc (36) which comprises a fixing region which is fixed axially to the first coupling part (18), the disc (36) comprising an annular portion (37) forming a target (34) and at least one elastic return portion (41) which is configured to deform elastically during the movement of the first coupling part (18) from the decoupled position to the coupled position and to exert a return force capable of elastically returning the first coupling part (18) to the decoupled position.

2. Transmission system (1) according to Claim 1, comprising a sensor (35) which is arranged facing the annular portion of the disc (36) and which is configured to deliver a signal representative of a distance between the sensor (35) and the annular portion forming a target (34) .

3. Transmission system (1) according to Claim 1 or 2, wherein the disc (36) comprises a plurality of elastic return portions each comprising an elastic blade (41) capable of bearing against a bearing region of the transmission system (1), said bearing region being axially fixed with respect to the second coupling part (5) .

4. Transmission system (1) according to any one of Claims 1 to 3, wherein the first element (4) comprises a housing (8) inside which the second coupling part (19) is housed, the first coupling part (18) comprising an inner portion (20) which is housed inside the housing (8), an outer portion (21) which is positioned outside the housing (8) and a plurality of connecting portions (22) which axially connect the inner portion (20) and the outer portion (21) of the first coupling part (18), each of the connecting portions (22) passing through a corresponding through-opening (23) formed in the housing (8) .

5. Transmission system (1) according to Claim 4 taken in combination with Claim 3, wherein the disc (36) is arranged outside the housing (8) and is fixed to the outer portion (21) of the first coupling part (18), each bearing region being positioned on the housing (8), with in particular the housing (8) comprising studs (44) projecting axially towards the outside of the housing (8) in the direction of the disc (36), each stud (44) having one end forming one of the bearing regions.

6. Transmission system (1) according to any one of Claims 4 to 5, wherein the second element (5) comprises a carrier ring (13) which is guided in rotation about the axis X inside the housing (8), two planet gears (14, 15) which are mounted in rotation on the carrier ring (13) about an axis Z perpendicular to the axis X and two sun gears (16, 17) which are movable in rotation about the axis X, are each engaged with the two planet gears (14, 15) and are each intended to be locked in rotation with a wheel shaft (2, 3), with in particular the second coupling part (19) of the coupling device (6) being locked in rotation with the carrier ring (13) with respect to the axis X.

7. Transmission system (1) according to any one of Claims 1 to 6, wherein the disc (36) comprises a plurality of fixing tabs (38) which are fixed to the first coupling part (18).

8. Transmission system (1) according to any one of Claims 1 to 7, wherein the coupling device (6) further comprises an actuator (24) comprising a casing (25) intended to be fixed to the chassis of the vehicle and a piston (28) movable axially with respect to the casing (25) between a retracted position and a deployed position and wherein the piston (28) bears against an actuating region of the disc (36) such that movement of the piston (28) from the retracted position to the deployed position causes movement of the first coupling part (18) of the coupling device (6) from the decoupled position to the coupled position; and wherein the disc (36) is capable of deforming elastically between the actuating region and the fixing region of the disc (36) during the movement of the piston (28) of the actuator (24) from the retracted position to the deployed position.

9. Transmission system according to Claim 8, wherein the actuating region of the disc (36) is separated from an abutment region of the first coupling part (18) by an axial clearance (49) which is dimensioned such that the disc (36) deforms during the movement of the piston (28) of the actuator (24) from the retracted position to the deployed position in order to compensate for axial manufacturing tolerances of the coupling device (6) and that the actuating region of the disc (36) comes into abutment against the abutment region of the first coupling part (18) when said axial manufacturing tolerances of the coupling device (6) have been compensated for.

10. Transmission system (1) according to Claim 8 or 9, wherein the disc (36) is dimensioned to generate a stiffness opposing axial approach of the piston (28) towards the first coupling part (18) which is between 50 and 500 N/mm.

11. Transmission system (1) according to any one of Claims 8 to 10, wherein the actuating region of the disc (36) is an inner annular portion (45).

12. Transmission system (1) according to Claim 11, wherein the inner annular portion (45) comprises oil passage grooves (47).

13. Transmission system (1) according to any one of Claims 1 to 12, wherein the coupling device (6) is a dog clutch device, one of the first and second coupling parts (18, 19) comprising teeth and the other comprising corresponding grooves in which said teeth are engaged when the first coupling part (18) is in the coupled position.

14. Transmission system (1) according to any one of Claims 1 to 13, wherein the coupling device is a disconnection device capable of selectively interrupting the transmission of the torque between the first element and the second element.

15. Motor vehicle comprising an electric machine and a transmission system (1) according to any one of Claims 1 to 14, the first element of the transmission system being driven by the electric machine.
